# EUROPÄISCHE PATENTSCHRIFT

(11) **EP 1 792 814 B1**
(45) Veröffentlichungstag und Bekanntmachung des Hinweises auf die Patenterteilung: **05.08.2009**
(21) Anmeldenummer: 06125249.0
(22) Anmeldetag: 01.12.2006
(51) Int. Cl.: B62J 1/10, B62J 1/28

(54) **Fahrradsattel**
Bicycle saddle
Selle de vélo

(30) Priorität: 01.12.2005 DE 202005018979 U
(43) Veröffentlichungstag der Anmeldung: 06.06.2007
(73) Patentinhaber: RTI Sports Vertrieb von Sportartikeln GmbH, 56220 Urmitz (DE)
(72) Erfinder: Smolik, Hans-Christian, 84163, Marklkofen (DE); Heimerdinger, Andreas, 75172, Pforzheim (DE); Tofaute, Kim, 56070, Koblenz (DE); Arnold, Franc, 56068, Koblenz (DE); Scheffer, Lutz, 87527, Sonthofen (DE)
(74) Vertreter: von Kirschbaum, Alexander

(56) Entgegenhaltungen:
- DE-C- 172 806
- GB-A- 579 347
- GB-A- 914 345
- GB-A- 2 268 454

## Beschreibung

Die Erfindung betrifft einen Fahrradsattel, insbesondere einen Rennrad-Fahrradsattel.

Fahrradsättel weisen ein Sitzelement auf, das üblicherweise aus einer mit einem Sitzpolster überzogenen Sattelschale aus Kunststoff besteht. Hierbei ist üblicherweise zwischen der Sattelschale und dem Überzug ein Sitzpolster angeordnet. Mit der Unterseite des Sitzelements ist ein Sattelgestell über Befestigungselemente verbunden. Das Sattelgestell trägt somit das Sitzelement und dient zur Befestigung an der Sattelstütze.

Aus US 4,099,769 ist ein Sattel bekannt, dessen Sattelhärte durch Ändern der Spannung des Sitzelementes eingestellt werden kann. Hierzu ist in der Sattelspitze ein zylindrisches Element mit Innengewinde vorgesehen. In dieses Element greift eine mit der Sattelspitze verbundene Gewindestange bzw. eine Madenschraube ein. Durch ein in der Sattelspitze vorgesehenes Loch kann die Gewindestange mit Hilfe eines Inbusschlüssels gedreht werden. Hierdurch kann der Abstand zwischen dem Sattelgestell und einer in der Sattelspitze vorgesehenen Hülse mit Innengewinde verändert werden. Dies bewirkt eine Veränderung der Spannung in dem Sitzelement. Ein derartiges Verstellelement kann jedoch nur mit einem Inbusschlüssel verstellt werden. Dies ist insbesondere nachteilig, da zum Einstellen der Sattelhärte somit Werkzeug mitgeführt werden muss. Auch ist das Vorsehen eines Loches in der Sattelspitze nachteilig, da sich hierin leicht Feuchtigkeit sammelt, die zur Korrosion des Verstellelements führen kann, wodurch ein Betätigen des Elements nicht mehr möglich ist. Ferner besteht die Gefahr, dass Feuchtigkeit in diesem Bereich zwischen die Sattelschale und den Sitzbezug wandert und den Sitzbezug beschädigt. Weiterhin ist nachteilig, dass die Gewindestange einen Teil des Sattelgestells bildet und daher große Kräfte übertragen muss, Dies kann zur Beschädigung oder sogar zum Bruch der Gewindestange führen.

GB 579347 beschreibt einen Fahrradsattel mit einem Sitzelement und einem Sattelgestell, das zwei Sattelstreben aufweist. Im vorderen Bereich des Sattels ist ein Verstellelement zum Einstellen der Sattelhärte vorgesehen. Das Verstellelement nimmt die vorderen Enden der beiden Sattelstreben auf und kann über eine Schraube in Längsrichtung des Sattels verschoben werden.

Aufgabe der Erfindung ist es, einen Fahrradsattel mit verbesserter Härteeinstellbarkeit zu schaffen.

Die Lösung der Aufgabe erfolgt erfindungsgemäß durch die Merkmale des Anspruchs 1.

Erfindungsgemäß ist zumindest ein Befestigungselement, das zur Befestigung des Sattelgestells am Sitzelement dient, derart ausgebildet, dass eine Relativbewegung zwischen dem Sitzelement und dem Sattelgestell in Sattellängsrichtung möglich ist, wobei die Relativbewegung vorzugsweise in dem mindestens einem Befestigungselement erfolgt. Ferner ist ein Verstellelement zur Lageverstellung zwischen dem Sitzelement und dem Sattelgestell in Längsrichtung vorgesehen. Hierbei ist das Verstellelement erfindungsgemäß derart angeordnet, dass die Kraftübertragung zwischen Sitzelement und Sattelgestell im Wesentlichen außerhalb des Verstellelements erfolgt. Hierdurch ist die Gefahr von Beschädigungen oder eines Bruches des Verstellelementes deutlich reduziert., da das Verstellelement einerseits mit dem Sitzelement, insbesondere der Unterseite des Sitzelements, und dem Sattelgestell verbunden ist. Durch Betätigen des Verstellelements erfolgt eine Verschiebung in Sattellängsrichtung insbesondere innerhalb mindestens eines Befestigungselements. Durch diese Abstandsänderung zwischen Befestigungselementen in Sattellängsrichtung erfolgt ein Erhöhen oder Verringern der Spannung in dem Sitzelement. Dadurch, dass zumindest ein Befestigungselement als bewegbares Befestigungselement entsprechend eines "Loslagers" ausgebildet ist, ist eine zuverlässige Kraftübertragung zwischen dem Sitzelement und dem Sattelgestell gewährleistet. Weiterhin ist das Verstellelement derart angeordnet, dass von dem Verstellelement nur geringe Kräfte, insbesondere nur die Verstellkräfte, übertragen werden müssen. Durch den Benutzer auf das Sitzelement ausgeübte Kräfte müssen nicht oder zumindest nur zu einem geringen Teil von dem Verstellelement auf das Sattelgestell übertragen werden. Beschädigungen oder gar einen Bruch des Verstellelements sind hierdurch ausgeschlossen. Hierdurch ist die Sicherheit des Fahrradsattels erfindungsgemäß erheblich verbessert.

Erfindungsgemäß weist das Sattelgestell zwei Gestellstreben auf, deren in Fahrtrichtung hinteres Endstück in gesäßseitigen Befestigungselementen, die mit der Unterseite des Sitzelements verbunden sind, verschiebbar angeordnet ist, wobei im Gesäßbereich des Sitzelements ein gemeinsames Verstellelement für die Befestigungselemente vorgesehen ist.

In einer bevorzugten Ausführungsform weist das zumindest eine, eine Längsverschiebung ermöglichende Befestigungselement ein erstes mit dem Sitzelement verbundenes erstes Halteteil und ein mit dem Sattelgestell verbundenes zweites Halteteil auf. Mittels des Verstellelements sind die beiden Halteteile relativ zueinander verschiebbar. Bei einer bevorzugten Ausführungsform ist das Verstellelement in das verschiebbare Befestigungselement integriert.

Besonders bevorzugt ist es hierbei, dass das zweite Halteteil nicht nur mit dem Sattelgestell, sondern zusätzlich auch mit dem Sitzelement verbunden ist. Hierbei erfolgt die Verbindung des zweiten Halteteils mit dem Sitzelement, vorzugsweise der Unterseite des Sitzelements derart, dass eine Längsverschiebung des zweiten Halteteils gegenüber dem Sitzelement möglich ist. Insbesondere ist hierzu an dem Sitzelement ein Schienenelement o,dgl. angeordnet. Über das Schienenelement kann eine Kraftübertragung insbesondere in vertikaler Richtung erfolgen, wobei weiterhin eine Verschiebung in Sattellängsrichtung, d.h. insbesondere in horizontaler Richtung, zwischen den zweiten Halteteil und dem Schienenelement möglich ist, Vorzugsweise weist das Schienenelement oder das zweite Halteteil ein Greifelement auf, Durch das Greifelement ist sichergestellt, dass keine Vertikalbewegung zwischen dem Schienenelement und dem zweiten Halteteil stattfindet, so dass ein Lösen der beiden Teile voneinander vermieden ist. Hierzu kann beispielsweise das Schienenelement Ansätze aufweisen, die in an dem zweiten Halteteil vorgesehene Längsnuten eingreifen. Selbstverständlich kann auch das Halteteil entsprechende Ansätze aufweisen, die in Längsnuten des Schienenelements eingreifen. Das Schienenelement oder das zweite Halteteil weist somit einen Längsschlitz auf, in den ein entsprechendes Gegenstück des jeweils anderen Teils in Längsrichtung einschiebbar ist, wobei sich die beiden Teile in montiertem Zustand in vertikaler Richtung hinterschneiden.

Erfindungsgemäß ist das Verstellelement im Gesäßbereich vorgesehen. Hierdurch ist das Verstellelement auf einfache Weise zugänglich. Hierbei ist es möglich, als Verstellelement zwei einzelne Verstellelemente vorzusehen, die jeweils im Bereich einer der beiden Befestigungselemente angeordnet bzw. in diese integriert sind, wie vorstehend beschrieben.

Erfindungsgemäß ist ein gemeinsames Verstellelement vorgesehen, das zwischen dem Sattelgestell und dem Sitzelement angeordnet ist, insbesondere mit der Unterseite des Sitzelements verbunden ist. Hierbei kann das Verstellelement in bevorzugter Ausführungsform bei Betrachtung des Sattels von hinten zwischen den beiden Befestigungselementen für den Gesäßbereich des Sitzelements vorgesehen sein. Hierbei ist vorzugsweise das erste Halteteil zwischen den beiden hinteren Befestigungselementen mit der Unterseite des Sitzelements verbunden, wobei das erste Halteteil in Sattellängsrichtung nicht zwingend auf derselben Höhe wie die Befestigungselemente angeordnet sein muss. Das erste Halteteil ist vorzugsweise im Bereich einer Mittel- bzw. Symmetrielinie des Sitzelements angeordnet. Das zweite Halteteil ist vorzugsweise sodann mit dem Sattelgestell, insbesondere den beiden sich von den hinteren Befestigungselementen nach vorne zu dem üblicherweise nur einen gemeinsamen vorderen Befestigungselementen erstreckenden Gestellstreben verbunden. Durch ein Verstellteil, wie eine Schraube, ist ein Verstellen des Abstandes des ersten und des zweiten Halteteils in Sattellängsrichtung möglich. Hierzu kann das Verstellteil als Schraube ausgebildet sein, die in ein in dem ersten Halteteil vorgesehenes Gewinde eingreift. Mit der Schraube bzw. dem Verstellteil ist das zweite Halteteil derart verbunden, dass das zweite Halteteil zusammen mit der Schraube relativ zu dem ersten Halteteil bewegt wird. Hierbei kann die Schraube gegenüber dem zweiten Halteteil zwar drehbar, jedoch in Schraubenlängsrichtung nicht verschiebbar ausgebildet sein.

Nachfolgend wird die Erfindung anhand bevorzugter Ausführungsformen unter Bezugnahme auf die anliegenden Zeichnungen näher erläutert.

### Es zeigen :

- Fig. 1: eine schematische Unteransicht einer Ausführungsform eines Sattels, die nicht Teil der Erfindung ist
- Fig. 2: eine schematische Schnittansicht einer Ausführungsform eines in ein Befestigungselement integrierten Verstellelements, das nicht Teil der Erfindung ist,
- Fig. 3: eine schematische Schnittansicht entlang einer Linie III-III in Fig. 2,
- Fig. 4: eine der Fig. 3 entsprechende Schnittansicht einer weiteren Ausführungsform, die nicht Teil der Erfindung ist,
- Fig. 5: eine schematische Schnittansicht einer weiteren Ausführungsform eines in ein Befestigungselement integrierten Verstellelements, das nicht Teil der Erfindung ist,
- Fig. 6: eine schematische Rückansicht eines erfindungsgemäßen Fahrradsattels mit einem im Gesäßbereich des Sattels angeordneten Verstellelement und
- Fig. 7: eine schematische Schnittansicht entlang der Linie VII-VII in Fig. 6.

Ein Sattel weist eine Sitzelement 10 auf, das im dargestellten Ausführungsbeispiel eine Sattelschale 12 aufweist, die mit einen Überzug 14 überzogen ist. Zur Befestigung des Sattels an einem Sattelrohr ist ein Sattelgestell 16 vorgesehen, das im dargestellten Ausführungsbeispiel zwei Gestellstreben 18 aufweist. Die beiden Gestellstreben 18 sind im Gesäßbereich 20 des Sattels mit der Unterseite 22 des Sitzelements 10 über Befestigungselemente 24 verbunden. Im dargestellten Ausführungsbeispiel erfolgt über die Befestigungselemente 24 eine starre, feste Verbindung zwischen den Gestellstreben 18 und der Unterseite 22 des Sitzelements 10.

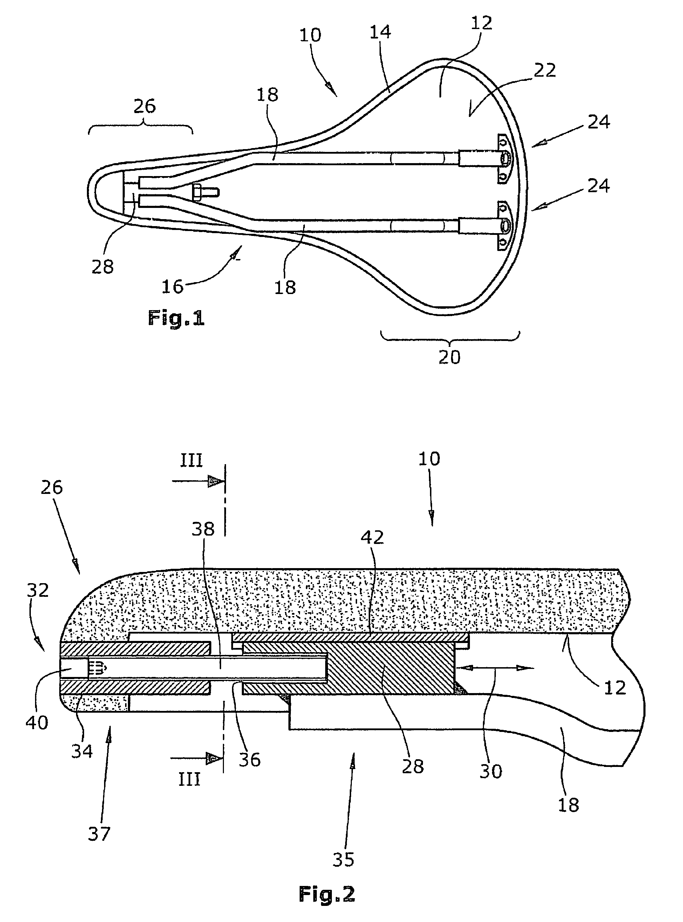

Im Bereich der Sattelspitze 26 sind die beiden Gestellstreben 18 des Sattelgestells 16 zusammengeführt und mit einem gemeinsamen zweiten Halteteil 28 (Fig. 2) verbunden.

Um eine Verschiebung zwischen dem Sitzelement 10 und dem Sattelgestell 16 in Sattellängsrichtung 30 zu ermöglichen, kann ein Verstellelement 32, insbesondere wie in Fig. 2 dargestellt, ausgebildet sein. Das Verstellelement 32 weist zusätzlich zu den mit dem Gestell 16 verbundenen zweiten Halteteil 28 ein erstes Halteteil 34 auf, das mit dem Sitzelement verbunden ist. Im dargestellten Ausführungsbeispiel ist das erste Halteteil 34 in die Spitze 26 des Sattels integriert und als zylindrische Hülse mit Innengewinde ausgebildet Das zweite Halteteil 28 weist beispielsweise ein Sackloch 36 auf, in das ein Verstellteil 38 eingesteckt ist. Bei dem Verstellteil 38 handelt es sich im dargestellten Ausführungsbeispiel um eine Gewindestange bzw. eine Madenschraube, Zum Betätigen des Verstellteils 38 bzw. zum Drehen der Madenschraube weist das Sitzelement 10 im Bereich der Spitze 26 eine Öffnung 40 auf, durch die ein Inbusschlüssel eingeführt werden kann. Durch Drehen des Verstellteils 38 erfolgt ein Verschieben des zweiten Halteteils 28 in Richtung des Pfeils 30 relativ zu dem Sitzelement 10, so dass die Härte des Sitzelements 10 einstellbar ist.

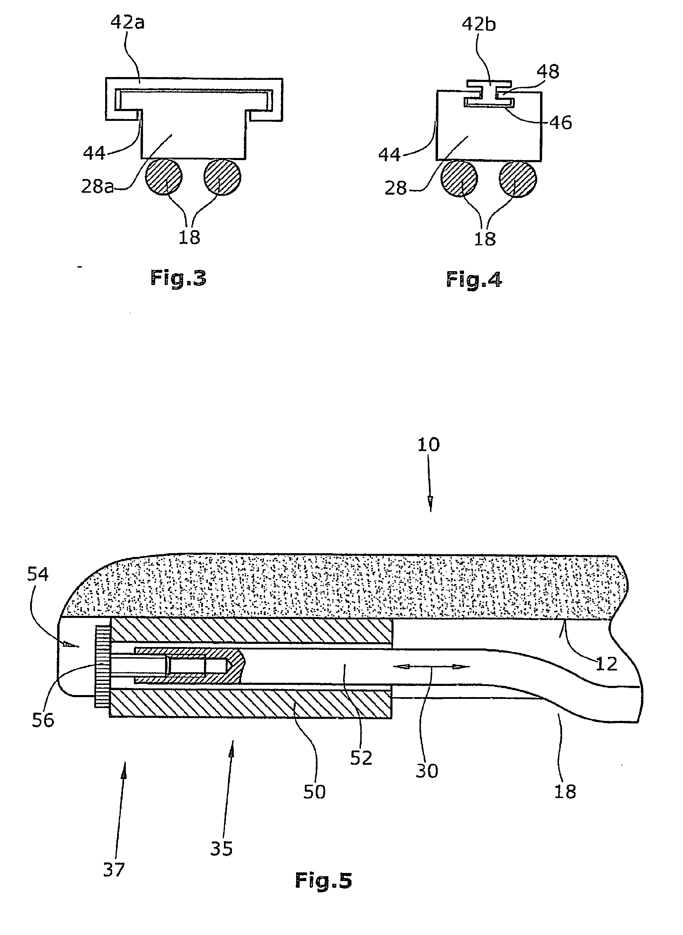

Um ein Verschieben des zweiten Halteteils 28 gegenüber dem Sitzelement 10 zu ermöglichen, ist an einer Unterseite 12 des Sitzelements 10 ein Schienenelement 42 vorgesehen, Das Schienenelement 42 kann, wie beispielsweise in Fign. 3 und 4 dargestellt, ausgebildet sein und mit dem zweiten Halteteil 28 zusammenwirken. Hierbei ist ein erstes Schienenelement 42a (Fig. 3) als Hohlprofil ausgebildet, das in Längsrichtung einen Schlitz 44 aufweist. Das zweite Halteteil 28a weist einen T-förmigen Querschnitt auf, wobei der Kopf des Halteteils 28a innerhalb des Schlitzes 44 angeordnet ist.

Das Halteteil 42 kann auch, wie in Fig. 4 dargestellt, als Träger 42b mit einem doppel-T-förmigen Querschnitt ausgebildet sein. Das Halteteil 28 weist hierbei den T-förmigen Kopf 46 des Schienenelements 42b teilweise umgreifende Ansätze 48 auf.

Bei den in den Fign. 3 und 4 dargestellten Ausführungsformen handelt es sich um Ausführungsbeispiele. Relevant ist hierbei, dass eine Verschiebung des zweiten Halteteils 28 gegenüber dem Schienenelement 42 in Sattellängsrichtung 30 ermöglicht ist. Bei den anhand der Fign. 2-4 beschriebenen Ausführungsformen ist das Schienenelement in das Befestigungselement integriert. Hierbei umfasst das Befestigungselement das Schienenelement 42 sowie das zweite Halteteil 28. Das Verstellelement umfasst neben dem ersten Halteteil 34 das zweite Halteteil 28 sowie das Verstellteil 38. Die anhand der Fign. 2-4 beschriebenen Ausführungsformen können nicht nur an dessen Spitze 26 vorgesehen sein, sondern auch die im Gesäßbereich 20 (Fig. 1) angeordneten Befestigungselemente 24 können entsprechend ausgebildet sein.

Bei einer weiteren Ausführungsform (Fig. 5) ist ein als erstes Halteteil dienendes Halteteil 50 mit der Unterseite 12 des Sitzelements 10 fest verbunden. Das Halteteil 50 ist hülsenförmig ausgebildet und weist eine beispielsweise zylindrische Durchgangsöffnung auf, in die ein Endstück 52 der Gestellstrebe 18 eingeführt ist. Die Gestellstrebe 18 ist in Sattellängsrichtung 30 innerhalb des ersten Halteteils 50 verschiebbar. Das Endstück 52 weist beispielsweise ein Innengewinde auf, in das ein insbesondere als Schraube ausgebildetes Verstellteil 54 eingreift. Das Verstellteil 54 weist einen Kopf 56 auf, der sich an dem ersten Halteteil 50 abstützt. Durch Drehen des Verstellteils 54 erfolgt somit ein Verschieben der Gestellstrebe 18 in Richtung des Pfeils 30.

Bei dem in Fig. 5 dargestellten Ausführungsbeispiel handelt es sich ebenfalls um ein Verstellelement, das in ein Befestigungselement integriert ist. Das Befestigungselement entspricht hierbei dem ersten Halteteil 50. Das Verstellelement umfasst das erste Halteteil 50 und das Verstellteil 54 sowie als zweites Halteteil das Endstück 52 der Gestellstrebe 18.

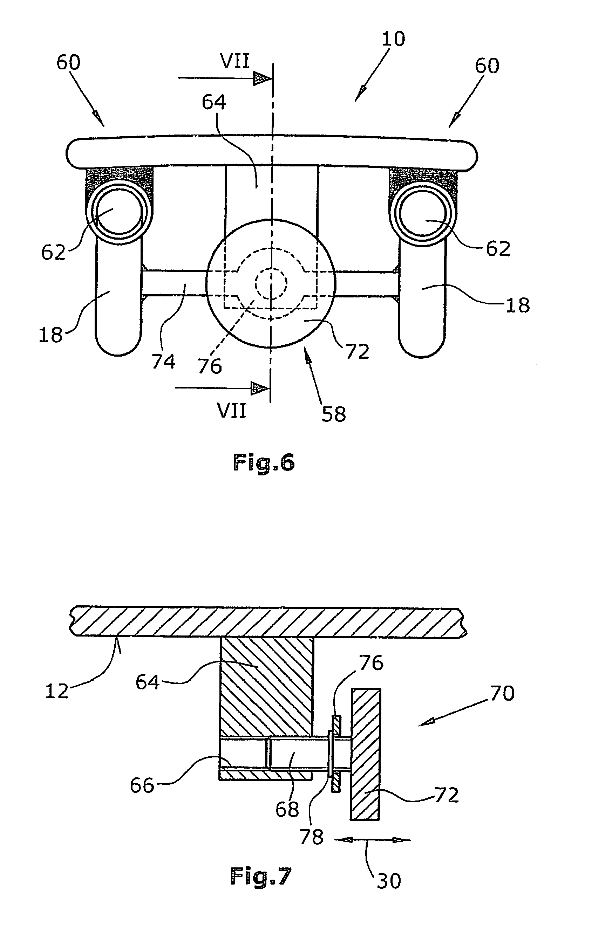

In einer weiteren bevorzugten Ausführungsform der Erfindung ist ein Verstellelement 58 im Gesäßbereich 20 des Fahrradsattels angeordnet. Hierbei ist in einer Rückansicht (Fig. 6) das Verstellelement 58 zwischen zwei gesäßseitigen Befestigungselementen 60 angeordnet. Im dargestellten Ausführungsbeispiel sind die Befestigungselemente 60 mit der Unterseite 12 des Sitzelements 10 verbunden und weisen zylindrische Öffnungen auf, an denen Stücke 62 der Gestellstreben 18 verschiebbar angeordnet sind.

Mit der Unterseite 12 des Sitzelements 10 ist ferner das erste Halteteil 64 fest verbunden. Das erste Halteteil 64 weist eine zylindrische Bohrung mit einem Innengewinde 66 auf. In das Innengewinde 66 greift eine Gewindestange 68 eines Verstellteils 70 ein. Mit der Gewindestange 68 ist ein scheibenförmiger Kopf 72 verbunden. Der Kopf 72 weist beispielsweise einen Durchmesser von 2 - 3 cm auf und ist von Hand betätigbar.

Mit den Gestellstreben 18 ist ein im dargestellten Ausführungsbeispiel im Wesentlichen horizontal verlaufendes stegförmiges zweites Halteteil 74 fest verbunden. Das zweite Halteteil ist mit dem Verstellteil 72 derart verbunden, dass bei einem Verstellen des Verstellteils 70 in Sattellängsrichtung 30 das zweite Halteteil 74 mitgenommen wird. Hierzu kann das Halteteil 74 beispielsweise einen ringförmigen Ansatz 76 (Fig. 7) aufweisen. Der ringförmige Ansatz 76 ist einerseits derart ausgebildet, dass die Gewindestange 68 gegenüber dem zweiten Halteteil 74 frei drehbar ist und andererseits das zweite Halteteil 74 über ein Fixierelement 78 wie ein Sprengring in Längsrichtung 30 mit dem Verstellteil 70 fest verbunden ist.

Durch Drehen des Verstellteils 70 erfolgt somit ein Verschieben des zweiten Halteteils in Richtung des Pfeils 30. Hierdurch erfolgt ein Bewegen der Gestellstreben 18. Dies erfolgt im dargestellten Ausführungsbeispiel in den Befestigungselementen 60, da die Endstücke 62 der Gestellstreben 18 in dem Befestigungselement 60 verschiebbar gehalten sind. Es ist ebenso möglich, dass eine Verschiebung in dem an der Sattelspitze angeordneten Befestigungselement erfolgt, wobei die Befestigungselemente 60 sodann die Gestellstreben 18 auch unverschiebbar halten können.

## Patentansprüche

1. Fahrradsattel, mit
einem Sitzelement (10),
einem mit einer Unterseite (12) des Sitzelements (10) über Befestigungselemente (60) verbundenes Sattelgestell (16) und
einem Verstellelement (58), zum Einstellen der Sattelhärte, wobei
zumindest ein Befestigungselement (60) derart ausgebildet ist, dass eine Relativbewegung zwischen dem Sitzelement (10) und dem Sattelgestell (16) in Sattellängsrichtung (30) möglich ist und wobei das Sattelgestell (16) zwei Gestellstreben (18) aufweist,
**dadurch gekennzeichnet, dass**
das Verstellelement (58) im Wesentlichen außerhalb des Kraftflusses zwischen Sitzelement (10) und Sattelgestell (16) angeordnet ist, wobei das in Fahrtrichtung hintere Endstück (62) der Gestellstreben (18) in gesäßseitigen Befestigungselementen (60), die mit der Unterseite (12) des Sitzelements (10) verbunden sind, verschiebbar angeordnet ist und wobei ein gemeinsames Verstellelement (58) für die Befestigungselemente (60) in einem Gesäßbereich (20) des Sitzelements (10) vorgesehen ist.

2. Fahrradsattel nach Anspruch 1, **dadurch gekennzeichnet, dass** das Verstellelement (58) ein fest mit dem Sitzelement (10) verbundenes erstes Halteteil (/64) und ein fest mit dem Sattelgestell (16) verbundenes zweites Halteteil (74) aufweist, wobei die Halteteile mittels eines Verstellteils (70) relativ zueinander verschiebbar sind.

3. Fahrradsattel nach Anspruch 2, **dadurch gekennzeichnet, dass** das erste Halteteil (64) mit dem Sitzelement (10) in einem Abstand zu den beiden gesäßseitigen Befestigungselementen (60) verbunden ist.

4. Fahrradsattel nach Anspruch 3, **dadurch gekennzeichnet, dass** das erste Halteteil (64) im Bereich einer Mittellinie des Sitzelements (10) angeordnet ist.

5. Fahrradsattel nach Anspruch 3 oder 4, **dadurch gekennzeichnet, dass** das erste Halteteil (64) in Wesentlichen denselben Abstand zu den beiden im Gesäßbereich vorgesehenen Befestigungselementen (60) aufweist.

## Claims

1. A bicycle saddle comprising
a seat element (10),
a saddle frame (16) connected with a lower side (12) of the seat element (10) via fastening elements (60), and
an adjustment element (58) for adjusting the hardness of the saddle, wherein
at least one fastening element (60) is configured such that a relative movement is possible between the seat element (10) and the saddle frame (16) in the longitudinal direction of the saddle (30) and wherein the saddle frame (16) comprises two frame struts (18),
**characterized in that**
the adjustment element (58) is arranged substantially outside the force flow between the seat element (10) and the saddle frame (16), wherein, seen in the travelling direction, the rear end part (62) of the frame struts (18) is arranged for displacement in buttocks-sided fastening elements (60) connected with the lower side (12) of the seat element (10), and wherein a common adjustment element (58) for the fastening elements (60) is provided in a buttocks region (20) of the seat element (10).

2. The bicycle saddle of claim 1, **characterized in that** the adjustment element (58) comprises a first holding member (64) fixedly connected to the seat element (10) and a second holding member (74) fixedly connected to the saddle frame (16), the holding members being displaceable with respect to each other by means of an adjustment member (70).

3. The bicycle saddle of claim 2, **characterized in that** the first holding member (64) is connected with the seat element (10) at a distance from the two buttocks-sided fastening elements (60).

4. The bicycle saddle of claim 3, **characterized in that** the first holding member (64) is arranged in the region of a centre line of the seat element (10).

5. The bicycle saddle of claim 3 or 4, **characterized in that** the distance of first holding element (64) to the two fastening elements (60) provided in the buttocks region is substantially the same.

## Revendications

1. Selle de bicyclette comprenant
un élément de siège (10).
un support de selle (16) connecté avec la face inférieure (12) de l'élément de siège (10) par des éléments de fixation (60), et
un élément d'ajustage (58) pour ajuster la dureté la selle,
au moins un élément de fixation (60) étant configuré de manière qu'un mouvement rélatif, selon la direction longitudinale de la selle (30), est possible entre l'élément de siège (10) et le support de selle (16), et le support de selle (16) comprenant deux barres de support (18),
**caractérisée en ce que**
l'élément d'ajustage est disposé sensiblement hors du flux de force entre l'élément de siège (10) et le support de selle (16), la partie d'extrémité arrière (62) des barres de support (19), vu dans la direction de mouvement, est arrangée de manière déplaçable dans des éléments de fixation (60) prévus dans la région fessière et connectés avec la face inférieure (12) de l'élément de siège (10), et un élément d'ajustage (58) commun pour les éléments étant prévu dans une région fessière (20) de l'élément de siège (10).

2. Selle de bicyclette selon la revendication 1, **caractérisée en ce que** l'élément d'ajustage (58) comprend une première partie de maintien (64) fixée à l'élément de siège (10) et une deuxième partie de maintien (74) fixée au support de selle (16), les parties de maintien étant déplaçables l'une à rapport de l'autre par moyen d'une partie d'ajustage (70).

3. Selle de bicyclette selon la revendication 2, **caractérisée en ce que** la première partie de maintien (64) est connectée avec les deux éléments de fixation (60) dans la région fessière, éloignée desdites éléments.

4. Selle de bicyclette selon la revendication 3, **caractérisée en ce que** la première partie de maintien (64) est prévue dans la région d'une ligne centrale de l'élément de siège (10).

5. Selle de bicyclette selon la revendication 3 ou 4, **caractérisée en ce que** la première partie de maintien (64) est écartée par sensiblement la même distance des deux éléments de fixation (60) prévues dans la région fessière.
